# EUROPEAN PATENT SPECIFICATION

(11) **EP 0 607 168 B1**
(45) Date of publication and mention of the grant of the patent: **26.11.1997**
(21) Application number: 92918780.5
(22) Date of filing: 11.09.1992
(51) Int. Cl.: D03D 11/02

(54) **A METHOD FOR MANUFACTURING A LAMINATING REINFORCED FIBRE STRUCTURE AND A CORRESPONDING REINFORCED FIBRE STRUCTURE**
VERFAHREN ZUR HERSTELLUNG EINER LAMINIERTEN ARMIERTEN FASERSTRUKTUR UND MIT FASER ARMIERTE STRUKTUR
PROCEDE DE FABRICATION D'UNE STRUCTURE A FIBRES RENFORCEE DESTINEE A ETRE STRATIFIEE ET STRUCTURE A FIBRES RENFORCEE CORRESPONDANTE

(30) Priority: 12.09.1991 FI 914286; 10.02.1992 FI 920540
(43) Date of publication of application: 27.07.1994
(73) Proprietor: FINNCLEVER OY, SF-50160 Mikkeli (FI)
(72) Inventor: LAITINEN, Mauri, SF-50160 Mikkeli (FI)
(74) Representative: Enskat, Michael Antony Frank
(86) International application number: FI9200241
(87) International publication number: WO9305219

(56) References cited:
- EP-A- 0 190 039
- EP-A- 0 299 309
- GB-A- 1 277 260

## Description

The present invention relates to a three dimensional structure and method of manufacturing the same. Reinforced fibre structures in which fibre layers are manufactured as a warp structure from cross-woven warp or weft yarn bundles, are bound to each other by the weave. A filling is put into the channels formed by layers and weaves on top of one another. The reinforced fibre structure obtained is intended to be laminated in the form desired.

Such multi-layer reinforced fibre structures are shown in patent publications EP 299,309, US 4,854,352, and JP 1-321946(8). Vorwerk & Co, BRD have demonstrated Technotex products, in which the woven layers are bound at a considerably short distance from each other by special binding fibres, which by themselves lift the layers away from each other without pressure.

In the aforementioned EP publication No. 299309 a multi-layer fibre structure is shown, in which filler fibres are used between and inside the layers. The layers are bound with separate binding fibres. In several cases the strength between the layers is essentially poorer than that in the direction of the layers.

In the JP publication No. 1-321946 (8) multi-layer fibre structures are shown, which are woven to one another at regular intervals. The binding fibres are disadvantageous in relation to the loading.

It is an object of this invention to create a new method for manufacturing a three-dimensional reinforced fibre structure, and a corresponding new form of reinforced fibre structure. According to the present invention there is provided a method of manufacturing a 3-dimensional structure comprising the steps of providing a fibre weave consisting of two superimposed layers which are linked at spaced intervals by ties to form between the layers a series of channels; applying a binder to the fibre weave, introducing a filler impermeable to the binder into each channel, compressing the whole filled fibre weave in a shaped mould to produce a structure which, when set, conforms to the shape of the mould characterised in that the filler is a foam material filler.

According to the present invention, there is provided a 3-dimensional structure comprising a compressed fibre weave consisting of two superimposed layers which are linked at spaced intervals by ties to form between the layers a series of channels, a filler filling the channels, and a binder to which the filler is impermeable, holding both the compressed fibre weave and the filler in a predetermined shape into which they have been compressed characterised in that the filler is a deformable foam material.

As will be appreciated a large three-dimensional structure in relation to the weave is obtained by using large fillers in the channels formed by two warp structures on top of each other, in which most advantageously either the weft or warp yarn bundles run back and forwards in the upper and lower layers, in which case the weave between the layers becomes very strong. The filler makes it possible to shape the three-dimensional reinforced fibre structure to an arbitrary shape on a mold. Level layers are advantageously used on top of and beneath the reinforced fibre structure in order to improve the surface strength. In principle filler pieces that are not impregnated with binder material can also be used in the fibre structures shown in the aforementioned publications by replacing the filler fibre bundles with these filler pieces. In this way the layer thickness of the structure can be considerably increased and the specific weight reduced.

Foam plastic is lighter than the previously used fibre fillers. A light structure can also be achieved by using hollow fillers. Even hollow metal pipes can be considered. The specific weight of wood is about half that of fibre material.

A three-dimensional structure and method of making the same both embodying the present invention will now be described with reference to the accompanying drawings in which:
Figure 1 shows a two-layered reinforced fibre structure before placing the fillers;
Figure 2 shows a finished laminating reinforced fibre structure;
Figure 3 shows a reinforced fibre structure formed on a mold;
Figure 4 shows a finished formed reinforced fibre piece;
Figure 5 shows one possible way of manufacturing thicker pieces; and
Figure 6 shows a beam structure formed with the aid of a reinforced fibre structure in accordance with the invention.

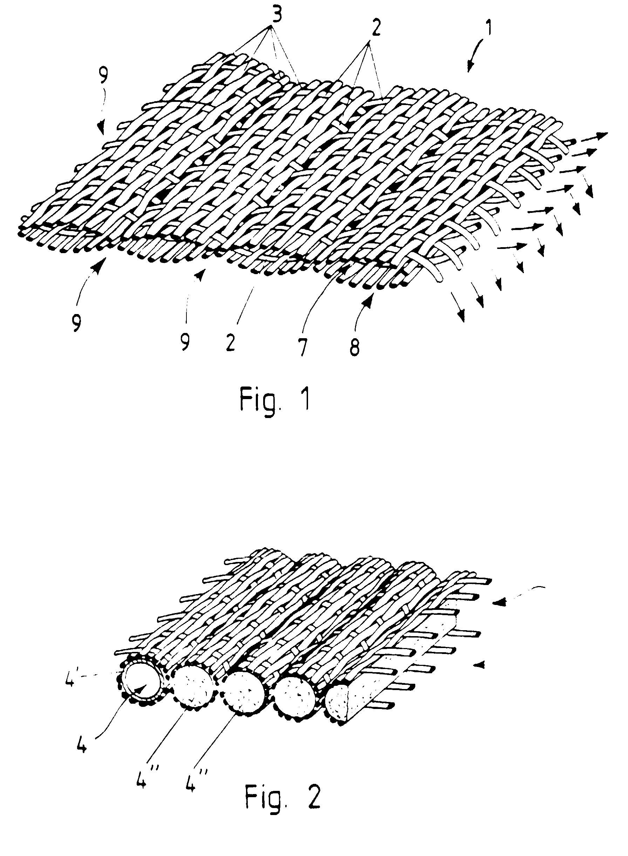

Figure 1 shows a two-layer reinforced fibre structure, though the layers may be more in number. What is essential is that the layers 7 and 8 on top of one another continually change sides in such a way that their warps 2 run in turn in the upper and lower layers. Their cross points, i.e. points of changing side are formed by ties 9, between which several fibres remain. Here the warps and wefts are formed of suitable bundles of fibres. Glass fibres are typically used. Aramid, carbon, ceramic, or other reinforcing fibres may also be used.

The filler pieces must not absorb resin completely, so that the finished product will be light. Foam plastic fillers permit good dampness, heat, and sound insulation. If required foam-type fillers can be removed from a laminated piece.

One or several common weft yarns can also be used as binding points.

A reinforced fibre structure in accordance with Figure 1 is taken to the next stage, in which the ties 9 and the inwardly closing channels of the layers 7 and 8 are filled with filler 4, which may be hollow pieces 4', for examples plastic pipes or foam plastic pieces 4". It is advantageous to use closed-cell foam plastic, for example polythene, which does not absorb resin. Other plastics and rubber can also be considered. These pieces do not necessarily need to be round, but can possibly be of some other cross-sectional form.

The reinforced fibre structure can contain, in addition to the structure in accordance with Figure 1, either on one or both sides even layers, which are loosely bound to these layers from between the ties. By means of them it is possible to obtain a great strength in the direction of the surface.

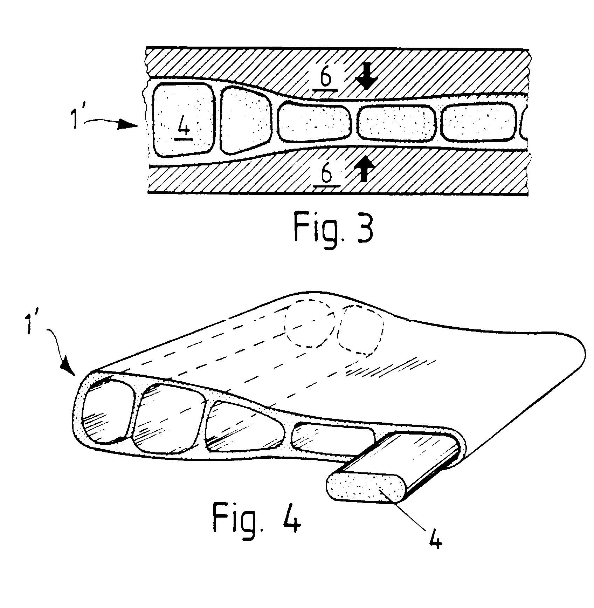

The fibre structure in accordance with Figure 2 with its fillers is treated with resin and is set in the mold 6 in accordance with Figure 3. The fillers 4 flex and permit the reinforced fibre structure 1' to conform to the shape of the mold.

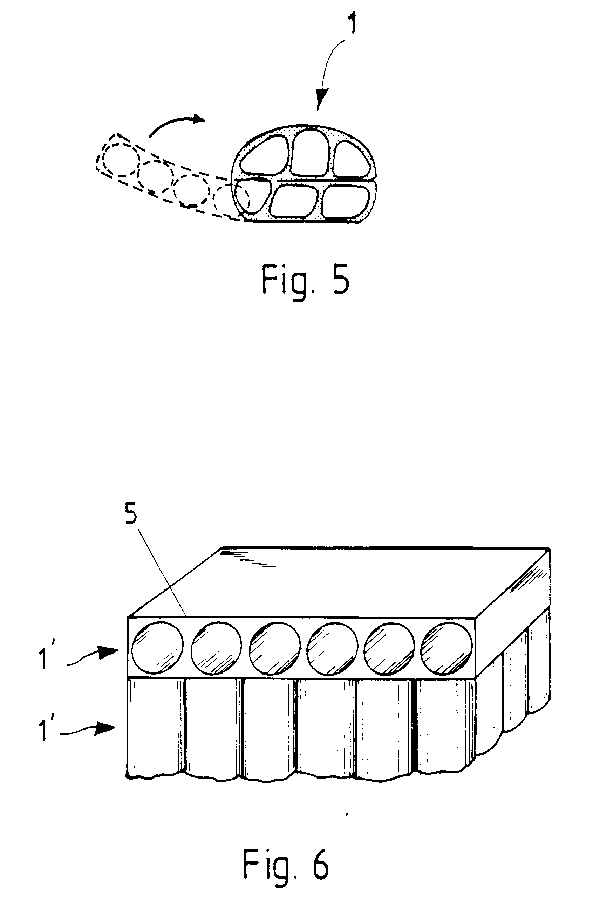

Figure 4 shows a finished reinforced fibre structure. The fillers 4 except one have been removed. In a corresponding way it is possible to form an arbitrarily formed piece. If a thicker piece is desired layer folding in accordance with Figure 5 can be used, or structures in accordance with Figure 2 can be laid on top of one another at a suitable angle to each other. The fibre structure can be manufactured in varying thickness to minimize forming.

Heat-forming technique can also be exploited in the reinforced fibre structure in accordance with the invention. A binding substance, for example polyester, is added to the bundles of fibres that run in a vertical direction to the ties, when after weaving the channels are filled with a core, which temporarily forms the aforementioned filler. The binding substance can then be melted momentarily with the aid of heat, when a cell structure blank is formed. The intention of the binding substance is to provide the reinforcing fibres with a suitable stiffness for sufficiently long for the laminating blank to be pressed in the mold into the desired form.

The foam plastic filler may be a thermoplasticly treated material, for example polythene, when pieces of the desired shape are manufactured in the mold with the aid of heat treatment to be laminated.

In the laminating stage the prepreg technique, which is as such known, can be used.

Between the ties there may be a varying amount, typically 10 - 25, of bundles of yarn running in the direction of the ties. In the test piece the polythene pieces have been of a diameter of 10 - 20 mm. In these normal glass fibre fabric (TEX 2400) was used, which was, however, woven together with the second layer in a manner in accordance with the invention. Using at least a 5 mm diameter a unique structure is provided.

Wood or metal can be used as materials for the fillers, especially to create adhesion in a laminating piece. A particularly interesting possibility is to use an expanding compact material as a filler. In this case for example the fillers expand due to the heat of the mold and raise the structure to become stiff.

## Claims

1. A method of manufacturing a 3-dimensional structure comprising the steps of providing a fibre weave consisting of two superimposed layers (7,8) which are linked at spaced intervals by ties (9) to form between the layers a series of channels; applying a binder to the fibre weave, introducing a filler (4) impermeable to the binder into each channel, compressing the whole filled fibre weave in a shaped mould (6) to produce a structure which, when set, conforms to the shape of the mould (6) characterised in that the filler is a foam material filler (4).

2. A method according to Claim 1, characterised in that the foam material (4) comprises foam plastics.

3. A method according to Claim 1, characterised in that the foam material (4) comprises closed cell foam plastics.

4. A method according to Claim 1, characterised in that the foam material (4) comprises hollow pieces.

5. A 3-dimensional structure comprising a compressed fibre weave consisting of two superimposed layers (7,8) which are linked at spaced intervals by ties (9) to form between the layers (7,8) a series of channels, a filler (4) filling the channels, and a binder to which the filler is impermeable, holding both the compressed fibre weave and the filler (4) in a predetermined shape into which they have been compressed characterised in that the filler is a deformable foam material.

6. A structure according to Claim 5, wherein the foam material (4) comprises pieces having a diameter of at least 5 mm.

## Patentansprüche

1. Zur Herstellung einer dreidimensionalen Struktur dienendes Verfahren, bestehend aus den zur Bildung des aus zwei übereinander angeordneten Lagen (7,8), die zwecks Bildung einer Serie von Kanälen zwischen ihnen in gewissen Abständen durch Bindungen (9) aneinandergefügt sind, bestehenden Fasergewebes dienenden Phasen; dem Aufbringen von Bindemittel auf das Fasergewebe, dem Einbringen von nicht bindemitteldurchlässiger Füllung (4) in die einzelnen Kanäle und dem Pressen des gesamten gefüllten Fasergewebes in eine vorgegebene Form (6) zwecks Herstellens der Struktur, die beim Erstarren die Gestalt der Form (6) annimmt, dadurch gekennzeichnet, daß die besagte Füllung aus einer Schaummaterialfüllung (4) besteht.

2. Verfahren nach Anspruch 1, dadurch gekennzeichnet, daß das Schaummaterial (4) Schaumstoffe enthält.

3. Verfahren nach Anspruch 1, dadurch gekennzeichnet, daß das Schaummaterial (4) Schaumstoffe mit geschlossenen Zellen enthält.

4. Verfahren nach Anspruch 1, dadurch gekennzeichnet, daß das Schaummaterial (4) Hohlkörper enthält.

5. Dreidimensionale Struktur bestehend aus einem von zwei übereinander angeordneten Lagen (7,8), die zwecks Bildung einer Serie von Kanälen zwischen ihnen (7,8) in gewissen Abständen durch Bindungen (9) aneinanderfügt sind, gebildeten gepreßten Fasergewebe, aus die Kanäle füllender Füllung (4), aus nicht füllstoffdurchlässigem Bindemittel, das das gepreßte Fasergewebe und die Füllung (4) in der im voraus festgelegten Gestalt hält, in die sie gepreßt worden waren, dadurch gekennzeichnet, daß die besagte Füllung aus formbarem Schaummaterial besteht.

6. Struktur nach Anspruch 5, bei der das Schaummaterial (4) Körper enthält, deren Durchmesser wenigstens 5 mm beträgt.

## Revendications

1. Procédé de fabrication d'une structure tridimensionnelle comprenant les étapes suivantes : fabrication d'un tissu de fibres consistant en deux nappes superposées (7, 8) liées à intervalles réguliers par les points de liage (9) pour former entre les nappes une série de tunnels ; application d'un liant au tissu de fibres ; introduction dans chaque tunnel d'un matériau ou élément de remplissage (4) imperméable au liant ; pressage de l'ensemble du tissu ainsi rempli dans un moule (6) pour produire une structure qui une fois durcie épouse la forme du moule, caractérisé en ce que ledit matériau de remplissage est un matériau de mousse (4).

2. Procédé selon la revendication 1 caractérisé en ce que le matériau de mousse (4) contient des mousses de plastique.

3. Procédé selon la revendication 1 caractérisé en ce que matériau de mousse (4) est constitué de mousses plastiques à cellules fermées.

4. Procédé selon la revendication 1 caractérisé en ce que le matériau de mousse (4) contient des éléments creux.

5. Structure tridimensionnelle constituée d'un tissu de fibres pressé comprenant deux nappes superposées (7, 8) liées à intervalles précis par les points de liage (9) de façon à former entre les nappes une série de tunnels, d'un matériau ou élément de remplissage des tunnels (4), d'un liant auquel le matériau de remplissage est imperméable et qui maintient le tissu de fibres pressé et le matériau de remplissage (4) dans la forme prédéfinie à laquelle ils ont été moulés, caractérisée en ce que ledit matériau de remplissage est un matériau de mousse façonnable (4).

6. Structure selon la revendication 5 dans laquelle le matériau de mousse (4) est constitué de pièces d'un diamètre minimum de 5 mm.
